(19) Europäisches Patentamt
European Patent Office
Office européen des brevets

(11) Veröffentlichungsnummer: **0 350 705 A2**

(12) # EUROPÄISCHE PATENTANMELDUNG

(21) Anmeldenummer: 89111645.1

(22) Anmeldetag: 27.06.89

(51) Int. Cl.4: C08J 5/18 , C08L 101/00 , //(C08L101/00,69:00)

(30) Priorität: 09.07.88 DE 3823306

(43) Veröffentlichungstag der Anmeldung: 17.01.90 Patentblatt 90/03

(84) Benannte Vertragsstaaten: DE FR GB IT

(71) Anmelder: BAYER AG

D-5090 Leverkusen 1 Bayerwerk(DE)

(72) Erfinder: Weymanns, Günther, Dr.
Karl-Arnold-Strasse 4
D-5090 Leverkusen(DE)
Erfinder: Berg, Klaus, Dr.
Hansastrasse 124
D-4150 Krefeld(DE)
Erfinder: Grigo, Ulrich, Dr.
Michelsheide 9
D-4152 Kempen 3(DE)
Erfinder: Idel, Karsten, Dr.
Am Schwarzkamp 38
D-4150 Krefeld(DE)
Erfinder: Bottenbruch, Ludwig, Dr.
Wöhlerstrasse 5
D-4150 Krefeld(DE)

(54) **Verwendung von Homopolycarbonaten aus 3,3'-Dihydroxydiphenylether zur Modifizierung von Folien aus Thermoplasten.**

(57) Gegenstand der vorliegenden Erfindung ist die Verwendung von thermoplastischen Homopolycarbonaten aus 3,3′-Dihydroxydiphenylether in Mengen von 3 Gew.-% bis 30 Gew.-% zur Modifizierung von Folien aus anderen Thermoplasten als den thermoplastischen Homopolycarbonaten aus 3,3′-Dihydroxydiphenylether, ein Verfahren zur Modifizierung von Folien aus diesen anderen Thermoplasten, die nach diesem Verfahren erhältlichen Folien sowie Mischungen enthaltend die genannten Homopolycarbonate und die anderen Thermoplasten.

EP 0 350 705 A2

Xerox Copy Centre

## Verwendung von Homopolycarbonaten aus 3,3′-Dihydroxydiphenylether zur Modifizierung von Folien aus Thermoplasten

Gegenstand der vorliegenden Erfindung ist die Verwendung von thermoplastischen Homopolycarbonaten aus 3,3′-Dihydroxydiphenylether in Mengen von 3 Gew.-% bis 30 Gew.-%, vorzugsweise von 5 Gew.-% bis 25 Gew.-% und insbesondere von 8 Gew.-% bis 20 Gew.-%, bezogen auf das Gesamtgewicht an Thermoplasten, zur Modifizierung von Folien aus anderen Thermoplasten als den thermoplastischen Homopolycarbonaten aus 3,3′-Dihydroxydiphenylether.

Ein weiterer Gegenstand der vorliegenden Erfindung ist ein Verfahren zur Modifizierung von Folien aus diesen anderen Thermoplasten, das durch gekennzeichnet ist, daß man diese anderen Thermoplasten mit thermoplastischen Homopolycarbonaten aus 3,3′-Dihydroxydiphenylether in Mengen von 3 Gew.-% bis 30 Gew.-%, vorzugsweise von 5 Gew.-% bis 25 Gew.-% und insbesondere von 8 Gew.-% bis 20 Gew.-%, bezogen auf das Gesamtgewicht an Thermoplasten, also auf die Gewichtssumme aus thermoplasti schen Homopolycarbonaten aus 3,3′-Dihydroxydiphenylether und anderen Thermoplasten, in bekannter Weise innig vermischt und danach das erhaltene Gemisch in bekannter Weise zu Folien verarbeitet.

Gegenstand der vorliegenden Erfindung sind außerdem die nach dem erfindungsgemäßen Verfahren erhältlichen Folien.

Gegenstand der vorliegenden Erfindung sind außerdem Mischungen enthaltend 3 Gew.-% bis 30 Gew.-%, vorzugsweise von 5 Gew.-% bis 25 Gew.-% und insbesondere von 8 Gew.-% bis 20 Gew.-% an thermoplastischen Homopolycarbonaten aus 3,3′-Dihydroxydiphenylether und 97 Gew.-% bis 70 Gew.-%, vorzugsweise 95 Gew.-% bis 75 Gew.-% und insbesondere 92 Gew.-% bis 80 Gew.-% an anderen Thermoplasten als den thermoplastischen Homopolycarbonaten aus 3,3′-Dihydroxydiphenylether.

Homopolycarbonate von 3,3′-Dihydroxydiphenylether sind bekannt (siehe beispielsweise Journal of Polymer Science, Part A: Polymer Chemistry, Vol. 25, Seiten 3413 bis 3422 (1987) und CRD, Corporate Research and Development, Schenectady New York, "Recent Advances in Polycarbonate Photodegradation" by A. Factor, W.V. Ligon, R.J. May and F.H. Greenberg, Dep. of Chemistry, Buffalo State College, Buffalo NY, General Elektric).

Folien aus diesen Homopolycarbonaten sind in der Literatur nicht bekannt.

Andere Thermoplasten im Sinne dieser Erfindung sind andere thermoplastische Polycarbonate auf Basis von Diphenolen der Formel (I)

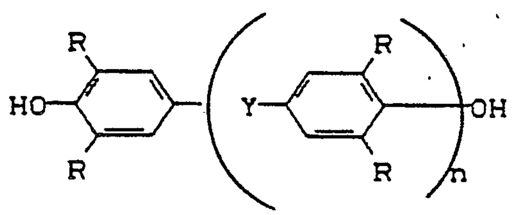

( I )

worin

n 0 oder 1 ist und worin

Y eine Einfachbindung, einen Alkylen- oder Alkylidenrest mit 1 bis 7 C-Atomen, einen Cycloalkylen - oder Cycloalkylidenrest mit 5 bis 12 C-Atomen, -O-, -S-,

$-\underset{\underset{O}{\|}}{S}-$, $-SO_2-$ oder $-\underset{\underset{O}{\|}}{C}-$ bedeutet, und

R H oder $CH_3$ ist.

Derartige thermoplastische Polycarbonate sind literaturbekannt oder nach literaturbekannten Verfahren herstellbar. Entsprechendes gilt für die Diphenole der Formel (I).

Beispiele für Diphenole sind:

Hydrochinon,

Resorcin,

Dihydroxydiphenyle,

Bis-(hydroxyphenyl)-alkane,

Bis-(hydroxyphenyl)-cycloalkane,

Bis-(hydroxyphenyl)-sulfide,

Bis-(hydroxyphenyl)-ether,
Bis-(hydroxyphenyl)-ketone,
Bis-(hydroxyphenyl)-sulfoxide,
Bis-(hydroxyphenyl)-sulfone und
$\alpha,\alpha'$-Bis-(hydroxyphenyl)-diisopropylbenzole,
sowie deren kernmethylierte Verbindungen.

Bevorzugte Diphenole der Formel (I) sind 2,2-Bis-(4-hydroxyphenyl)-propan (Bisphenol A), 2,2-Bis-(4-hydroxy-3,5-dimethylphenyl)-propan (Tetramethylbiphenol A), 2,4-Bis-(4-hydroxyphenyl)-2-methylbutan, 1,1-Bis-(4-hydroxyphenyl)-cyclohexan, 4,4′-Dihydroxydiphenylsulfid, 4,4′-Dihydroxydiphenyl und 4,4′-Dihydroxydiphenylsulfon.

Besonders bevorzugt ist Bisphenol-A. Es können auch beliebige Mischungen der genannten Diphenole für die Herstellung der Polycarbonate verwendet werden.

Die Polycarbonate auf Basis der Diphenole der Formel (I) sind somit sowohl Homopolycarbonate als auch Copolycarbonate als auch Copolycarbonate, sie können sowohl linear als auch verzweigt sein.

Die Molekulargewichte $\overline{M}w$ (Gewichtsmittelmolekulargewicht, ermittelt mit der Gelpermeationschromatographie in Tetrahydrofuran) der Polycarbonate auf Basis der Diphenole der Formel (I) liegen zwischen 10.000 g/mol und 300.000 g/mol, vorzugsweise zwischen 12.000 g/mol und 150.000 g/mol.

Andere Thermoplasten im Sinne dieser Erfindung sind auch aromatische Polyestercarbonate auf Basis von Diphenolen, Tere- und/oder Isophthalsäure, Phosgen, Kettenabbrechern und gegebenenfalls Verzweigern, welche relative Lösungsviskositäten von 1,18 bis 2,0, insbesondere von 1,2 bis 1,5 (gemessen in einer Lösung von 0,5 g Polyestercarbonat in 100 ml $CH_2Cl_2$-Lösung bei 25° C) haben und worin das Verhältnis von Carbonatstrukturen zu aromatischen Dicarbonsäure = Esterstrukturen vorzugsweise zwischen 10 Mol-% zu 90 Mol-% und 40 Mol-% zu 60 Mol-%, bezogen jeweils auf die Molsumme aus Carbonat- und Dicarbonsäureesterstrukturen liegt.

Die aromatischen Polyestercarbonate und ihre Herstellung sind literaturbekannt (siehe beispielsweise EP-OS 00 36 080(Le A 20 203-EP)). Bevorzugte Diphenole zu ihrer Herstellung sind die der Formel (I), worin R = H ist.

Andere Thermoplasten sind auch aliphatische thermoplastische Polyester, also vorzugsweise Polyalkylenglykolterephthalate. Polyalkylenterephthalate im Sinne der vorliegenden Erfindung sind beispielsweise solche auf Basis von Ethylenglykol, Propandiol-1,3, Butandiol-1,4, Hexandiol-1,6 und 1,4-Bis-hydroxymethyl-cyclohexan.

Die Molekulargewichte ( $\overline{M}_w$) dieser Polyalkylenglykolterephthalate liegen zwischen 10 000 und 80 000 g/mol. Die Polyalkylenglykolterephthalate können nach bekannten Verfahren beispielsweise aus Terephthalsäuredialkylester und dem entsprechenden Diol durch Umesterung erhalten werden (siehe z.B. US-Patente 2 647 885, 2 643 989, 2 534 028, 2 578 660, 2 742 494, 2 901 466).

Beispielsweise geht man von einem niederen Alkylester der Terephthalsäure, vorzugsweise dem Dimethylester, aus und estert diesen mit einem Überschuß an Diol in Gegenwart geeigneter Katalysatoren zum Bishydroxyalkylester der Terephthalsäure um. Dabei wird die Temperatur ausgehend von 140° C auf 210 bis 220° C erhöht. Der in Freiheit gesetzte Alkohol wird abdestilliert. Die Aufkondensation erfolgt anschließend bei Temperaturen von 210 bis 280° C, der Druck wird dabei stufenweise bis auf weniger als 1 Torr erniedrigt, wobei das überschüssige Diol abdestilliert wird.

Die erfindungsgemäß geeigneten, aliphatischen, thermoplastischen Polyester sind somit literaturbekannt oder nach literaturbekannten Verfahren erhältlich.

Erfindungsgemäß geeignete andere Thermoplasten sind auch thermoplastische Polyamide. Geeignete Polyamide sind beispielsweise Nylon-6,6, das durch Kondensation von Hexamethylendiamin und Adipinsäure hergestellt wurde; Nylon-6,10, hergestellt aus Hexamethylendiamin und Sebacinsäure; Polymere der $\epsilon$-Aminocapronsäure oder des $\epsilon$-Caprolactams, sogenanntes Nylon-6; Polyamid 11, das Eigenkondensationsprodukt der 11-Aminoundecansäure; Mischpolymerisate aus Hexamethylendiamin, $\epsilon$-Caprolactam, Adipinsäure und Sebacinsäure; Mischpolymerisate aus Hexamethylendiamin und Adipinsäure, modifiziert mit Formaldehyd und Methanol; Polyamide, die durch Umsetzung eines linearen Diamins mit dimeren Säuren, welche aus Isobutylendimeren erhalten worden sind, hergestellt wurden, sowie Polyamide, die aus polymeren ungesättigten Fettsäuren und verschiedenen Polyaminen hergestellt wurden.

Alle erfindungsgemäß geeigneten Polyamide sollen die $-\underset{\underset{O}{\|}}{C}-NH-$Gruppierung als Brückenglied in der Hauptkette enthalten und mittlere Molekulargewichte ( $\overline{M}w$, wird gelchromatographisch in m-Kresol bestimmt) zwischen 1000 und 100.000 g/mol haben (Literatur siehe z.B. US-Patent 3 431 224, Spalte 3, Zeilen 58-73).

Die erfindungsgemäß geeigneten, thermoplastischen Polyamide sind somit literaturbekannt oder nach

literaturbekannten Verfahren erhältlich.

Erfindungsgemäß geeignete andere Thermoplasten sind auch sogenannte "LC-Polymere". Als LC-Polymere werden Polymere bezeichnet, die flüssigkristalline Schmelzen bilden können. Derartige Polymere, die auch als "thermotrop" bezeichnet werden, sind hinreichend bekannt. (Siehe beispielsweise EP-OS 0 131 846, EP-OS 0 132 637 und EP-OS 0 134 959).

In den genannten Literaturstellen ist weitere Literatur angezogen und darüberhinaus die Ermittlung des flüssigkristallinen Zustandes von Polymerschmelzen beschrieben.

"LC"-Polymere sind beispielsweise aromatische Polyester auf Basis von gegebenenfalls substituierten p-Hydroxybenzoesäure, gegebenenfalls substituierten Iso und/oder Terephthalsäure, 2,7-Dihydroxynathalin und anderen Diphenolen (Ep-OS 0 131 846), aromatische Polyester auf Basis von gegebenenfalls substituierter p-Hydroxybenzoesäure, Diphenolen, Kohlensäure und gegebenenfalls aromatischen Dicarbonsäuren (EP-OS 0 132 637) und aromatische Polyester auf Basis von gegebenenfalls substituierter p-Hydroxybenzoesäure, 3-Chlor-4-hydroxybenzoesäure, Isophthalsäure, Hydrochinon und 3,4′- und/oder 4,4′-Dihydroxybiphenyl, 3,4′- und/oder 4,4′-Dihydroxydiphenylether und/oder 3,4′- und/oder 4,4′-Dihydroxydiphenylsulfide. (EP-OS 0 134 959).

Erfindungsgemäß geeignete andere Thermoplasten sind auch thermoplastische Poly-$C_1$-$C_4$-alkyl-methacrylate, also Polymere von

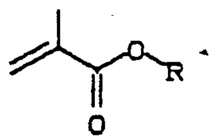

mit R = $C_1$-$C_4$-Alkyl.

Geeignete Polymere sind solche des Methyl-, Ethyl-, Propyl- oder Butylmethacrylsäureesters, vorzugsweise des Methyl- oder Ethyl-methacrylsäureesters. Es sind sowohl Homopolymerisate als auch Copolymerisate dieser Methacrylsäureester darunter zu verstehen. Darüber hinaus können bis maximal 9,5 Gew.-% andere ethylenisch ungesättigte, copolymerisierbare Monomere, bezogen jeweils auf Gesamtgewicht an diesen ungesättigten Monomeren und den Methacrylsäureestern, copolymerisiert sein, so daß die erfindungsgemäß geeigneten $C_1$-$C_4$-Alkyl-methacrylatpolymeren aus 90,5 Gew.-% bis zu 100 Gew.-% an Alkylmethacrylat-Einheiten und aus 9,5 Gew.-% bis 0 Gew.-% an anderen ethylenisch ungesättigten Monomereinheiten aufgebaut sind.

Andere ethylenisch ungesättigte copolymerisierbare Monomere sind beispielsweise (Meth)Acrylnitril, (α-Methyl) Styrol, Bromstyrol, Vinylacetat, Acrylsäure-$C_1$-$C_8$-alkylester, (Meth)Acrylsäurearylester, (Meth)-Acrylsäure, Ethylen, Propylen, N-Vinylpyrrolidon, Vinylsulfonsäure(salze) oder Styrolsulfonsäure(salze).

Die erfindungsgemäß geeigneten Polymethacrylate stellen in bestimmten organischen Lösungsmitteln lösliche Stoffe dar und besitzen somit einen linearen oder verzweigten Aufbau.

Die erfindungsgemäß geeigneten Polymethacrylate können nach bekannten Polymerisationsverfahren hergestellt werden, vorzugsweise aber durch radikalische oder thermische Polymerisation. Als Polymerisationsverfahren eignen sich Verfahren in Emulsion, Masse, Suspension, Dispersion, insbesondere die Emulsions-, vorzugsweise aber die Masse- bzw. Lösungspolymerisation. Die Molekulargewichte der Polymethacrylate können durch bekannte verfahrensbedingte Maßnahmen beispielsweise durch Verwendung von Mercaptanen als Regler in weiten Bereichen variiert werden. Üblicherweise besitzen die erfindungsgemäß geeigneten Polymethacrylate Molekulargewichte (bzw. Standinger-Indices, bzw. Schmelzviskositäten), die deren thermoplastische Spritzguß- oder Extrusionsverarbeitung sinnvoll machen.

Die erfindungsgemäß geeigneten thermoplastischen Poly-$C_1$-$C_4$-alkyl-methacrylate sind somit literaturbekannt oder nach literaturbekannten Verfahren erhältlich.

Erfindungsgemäß geeignete andere Thermoplasten sind auch thermoplastische lineare und verzweigte Polyarylensulfide. Sie haben Struktureinheiten der allgemeine Formel

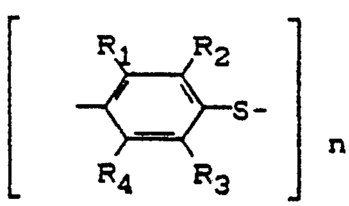

wobei $R_1$ bis $R_4$ unabhängig oder gleich sein können und $C_1$-$C_6$-Alkyl, Phenyl oder Wasserstoff sind. Weiterhin können die Polyarylensulfide auch Diphenyl-Einheiten enthalten.

Polyarylensulfide und ihre Herstellung sind bekannt (siehe beispielsweise US-PS 33 54 129 und EP-OS 0 171 021 sowie die in der EP-OS 0 171 021 angezogene Literatur).

Erfindungsgemäß geeignete andere Thermoplasten sind auch thermoplastische Polyarylensulfone.

Geeignete Polyarylensulfone im Sinne der Erfindung haben mittlere Gewichtsmittelmolekulargewichte $\overline{M}$ w (gemessen nach der Lichtstreumethode in $CHCl_3$) zwischen 1000 und 200 000 g/mol, vorzugsweise zwischen 20 000 und 60 000 g/mol. Beispiele dafür sind die nach bekannten Verfahren erhältlichen Polyarylensulfone aus 4,4'-Dichlordiphenylsulfon und einem Bisphenol, insbesondere 2,2-Bis-(4-hydroxyphenyl)-propan, mit mittleren Gewichtsmittelmolekulargewichten ( $\overline{M}$ w) von 2000 bis 200 000 g/mol.

Derartige Polyarylensulfone sind literaturbekannt (siehe beispielsweise US-PS 3 264 536, DE-AS 1 794 171, GB-PS 1 264 900, US-PS 3 641 207, EP-A-00 38 028, DE-OS 3 601 419 und DE-OS 3 601 420).

Die geeigneten Polyarylensulfone können auch in bekannter Weise verzweigt sein (siehe beispielsweise DE-OS 2 305 413).

Erfindungsgemäß geeignete andere Thermoplasten sind auch thermoplastische Poly-phenylenoxide, vorzugsweise Poly-(2,6-dialkyl-1,4-phenylenoxide). Erfindungsgemäß geeignete Polyphenylenoxide haben Gewichtsmittelmolekulargewichte $\overline{M}$ w (gemessen nach der Lichtstreumethode in Chloroform) zwischen 2000 und 100 000 g/mol, vorzugsweise zwischen 20 000 und 60 000 g/mol. Derartige Polyphenylenoxide sind literaturbekannt oder nach literaturbekannten Verfahren erhältlich.

Die Herstellung der bevorzugt verwendbaren Poly-(2,6-dialkyl-1,4-phenylenoxide) können nach bekannten Verfahren durch oxydierende Kondensation von 2,6-Dialkylphenolen mit Sauerstoff in Anwesenheit von Katalysatorkombinationen aus Kupfersalzen und tertiären Aminen erhalten werden (siehe beispielsweise DE-OS 2 126 434 und US-PS 3 306 875).

Geeignete Poly-(2,6-dialkyl-1,4-phenylenoxide) sind insbesondere die Poly-[2,6-di($C_1$-$C_4$-alkyl)-1,4-phenylenoxide] wie beispielsweise Poly-(2,6-dimethyl-1,4-phenylenoxid).

Geeignete 2,6-Dialkylphenole sind insbesondere solche mit $C_1$-$C_4$-Alkylsubstituenten wie z.B. 2,6-Dimethylphenol, 2-Methyl-6-ethylphenol, 2,6-Diethylphenol, 2-Ethyl-6-n-propylphenol, 2-Methyl-6-isopropylphenol, 2-Methyl-6-n-propylphenol, 2-Methyl-6-butylphenol und 2,6-Di-n-propylphenopl.

Geeignete Katalysatorkombinationen sind insbesondere Kupfer(I)-chlorid und Triethylamin, Kupfer(I)-sulfat und Tributylamin, Kupfer(I)-acetat und N-Methylmorpholin und Kupfer(I)-chlorid und Pyridin.

Ein geeignetes Herstellungsverfahren für Poly-(2,6-dialkyl-1,4-phenylenoxide) ist beispielsweise unter Verwendung von Kupfer(I)-chlorid/Pyridin als Katalysatorkombination gemäß DT-OS 2 126 434 wie folgt:

Ein 2,6-Dialkyl-phenol wird in einer Mischung aus n-Butanol/Toluol gelöst und in Anwesenheit des Kupfer(I)-chlorid/Pyridin-Komplexes unter Sauerstoffzufuhr oxidativ-dehydrierend kondensiert. Das ausgefallene Polyphenylenoxid wird anschließend aus Chloroform/Methanol umgefällt.

Erfindungsgemäß geeignete andere Thermoplasten sind auch thermoplastische Copolymerisate von Styrol und/oder $\alpha$-Methylstyrol mit Acrylnitril und/oder mit Methacrylnitril, wobei im allgemeinen 50 bis 95 Gew.-Teile Styrol und/oder $\alpha$-Methylstyrol und 50 bis 5 Gew.-Teile Acrylnitril und/oder Methacrylnitril, bezogen jeweils auf 100 Gew.-Teile Copolymerisat, in den thermoplastischen Copolymerisaten einpolymerisiert sind.

Bevorzugte Gewichtsverhältnisse im Copolymerisat sind 60 bis 80 Gew.-Teile Styrol und/oder $\alpha$-Methylstyrol zu 40 bis 20 Gew.-Teilen Acrylnitril und/oder Methacrylnitril.

Derartige thermoplastische Copolymerisate sind bekannt und lassen sich durch radikalische Polymerisation, insbesondere durch Emulsions-, Suspensions-, Lösungs- oder Massepolymerisation herstellen. Die Copolymerisate besitzen vorzugsweise Molekulargewichte $\overline{M}$ w (Gewichtsmittel, ermittelt durch Lichtstreuung oder Sedimentation) zwischen 15 000 und 200 000 g/mol.

Folien im Sinne der vorliegenden Erfindung sind solche einer Dicke von 1 $\mu$m bis 500 $\mu$m, insbesondere von 10 $\mu$m bis 300 $\mu$m.

Die erfindungsgemäß modifizierten Folien besitzen sehr gute Barriere-Eigenschaften gegen Gase wie beispielsweise Sauerstoff, Stickstoff und Kohlendioxid, und dies noch bei einer Dicke der Folien von 10 $\mu$m. Andererseits haben die erfindungsgemäß modifizierten Folien ein gutes Eigenschaftsbild insbesondere bezüglich Mechanik und Verarbeitbarkeit, welches durch die Wahl des anderen Thermoplasten in gewünschten Grenzen auf einfache Weise beeinflußbar ist. Hierbei wurden die Barriere-Eigenschaften wie folgt ermittelt:

Die soweit wie möglich von Fehlstrukturen und Lösungsmittel freien Folien werden im Vakuum 2 Tage gelagert und evtl. noch im Polymeren gelöste Gase so extrahiert. Dann werden mit Druckmeßkondensatoren als Detektor bei Raumtemperatur und einer relativen Feuchtigkeit von 0 % kleine Folienstücke in eine Aluminium-Schablone eingeklebt. Dabei beträgt die effektive Meßfläche etwa 1,8 $cm^2$. Die Foliendicke wird

mit einer Mikrometerschraube gemessen. Die Permeabilität wird erst nach einer Meßzeit von 20 h aus dem Durchsatz des entsprechenden Gases durch die Folie bestimmt.

Die Durchlässigkeit von Kunststoff-Folien für Gase und Dämpfe ist untersucht (siehe beispielsweise "Kolloid-Zeitschrift", Band 167, November/December 1959, Seiten 55 bis 62) Polycarbonatfolien sind darin einbezogen (siehe dazu auch H. Schnell, "Linear Aromatic Polyesters of Carbonic Acid", Industrial and Engineering Chemistry, Vol. 51, No. 2, Februar 1959, Seiten 157 bis 160).

Aus der DE-OS 2 248 818 (Le A 14 667) ist ein spezielles Verfahren zur Herstellung von dünnen, porenfreien Polycarbonatfolien bekannt, wobei dieses Verfahren insbesondere für Polycarbonate aus 2,2-Bis-(3,5-dimethyl-4-hydroxyphenyl)-propan brauchbar ist.

In dem US-Patent 3 822 202 werden Membranen aus speziellen Polyimiden, Polyestern und Polyamiden beschrieben. Durch eine Wärmebehandlung bei der Herstellung dieser Membranen wird die selektive Durchlässigkeit dieser Membranen für verschiedene Gase verbessert.

Aus dem US-Patent 4 195 157 sind Polycarbonate aus halogenierten Diphenolen bekant, die verbesserte Flammwidrigkeit mit guten Barriere-Eigenschaften für $H_2O$-Dampf und Gase verbinden.

Aus dem US-Patent 4 304 899 sind Polycarbonate aus alkylierten Diphenolen bekannt, die verbesserte Barriere-Eigenschaften für $H_2O$-Dampf und Gase haben sollen.

Aus der EP-A-0 242 147 sind semipermeable Polycarbonatmembranen bekannt, deren Polycarbonate überwiegend aus tetrahalogenierten Diphenolen hergestellt sind.

Aus der EP-A-0 244 126 sind Membranen aus Polyestercarbonaten bekannt, wobei die Polyestercarbonate solche auf Basis von Tetrabromdiphenolen sind. Die Membranen sind zur Trennung von Gasen geeignet.

Aus dem US-Patent 4 142 021 sind Laminate bekannt, die excellente Barriere-Eigenschaften für Sauerstoff und Wasserdampf haben.

In "Journal of Applied Polymer Science", Vol. 29, Seiten 845 bis 852 (1984) wird die Gasdurchlässigkeit von Mischungen aus Bisphenol-A-Polycarbonaten und Copolyestern, die aus 1,4-Cyclohexan-di-methanol und Mischungen von Terephthalsäure mit Isophthalsäure aufgebaut sind, untersucht.

In "Journal of Polymer Science, Part B, Polymer Physics", Vol. 25, Seiten 1999 bis 2026 wird die Gasabsorption und der Transport in substituierten Polycarbonaten untersucht, wobei zum Vergleich Bisphenol-A-Polycarbonat angezogen wird.

Der Gegenstand der vorliegenden Erfindung ist unseres Erachtens durch den zitierten Stand der Technik weder vorweggenommen noch nahegelegt.

Die relative Viskosität der erfindungsgemäß einzusetzenden Homopolycarbonate aus 3,3′-Dihydroxydiphenylethern liegt zwischen 1,05 bis 1,95, vorzugsweise zwischen 1,10 bis 1,4, besonders bevorzugt zwischen 1,15 und 1,3 (gemessen bei 25° C in $CH_2Cl_2$ und bei einer Konzentration von 0,5 g Polycarbonat in 100 ml $CH_2Cl_2$).

Unabhängig davon können die Gewichtsmittelmolekulargewichten $\overline{M}w$ (gemessen durch Gelpermeationschromatographie) von 10.000 g/mol bis 300.000 g/mol, vorzugsweise von 12.000 g/mol bis 200.000 g/mol, und insbesondere von 17.000 g/mol bis 80.000 g/mol sein.

Die Uneinheitlichkeiten ($U = \frac{Mw}{Mn} - 1$) der erfindungsgemäß einzusetzenden Homopolycarbonate aus 3,3′-Dihydroxydiphenylether sollen zwischen 0,3 und 10, vorzugsweise zwischen 0,4 und 8 und insbesondere zwischen 0,8 und 5 liegen. Mn wurde hierbei ebenfalls durch Gelpermeationschromatographie gemessen.

Die erfindungsgemäß einzusetzenden Homopolycarbonate können allein oder als Gemisch eingesetzt werden. Hierbei ist es beispielsweise auch vorteilhaft, Mischungen von relativ niedermolekularen Homopolycarbonaten mit relativen Viskositäten von etwa 1,05 bis 1,2 mit höhermolekularen Homopolycarbonaten mit relativen Viskositäten von 1,5 bis 2,5 zu vermischen, vorausgesetzt daß die relativen Viskositäten der Mischungen wiederum zwischen 1.05 und 1,95, vorzugsweise zwischen 1,10 und 1,40 und insbesondere zwischen 1,15 und 1,30 liegen.

Als Kettenabbrecher für die Einstellung der Molekulargewichte der Homopolycarbonate aus 3,3′-Dihydroxydiphenylether dienen in bekannter Weise monofunktionelle Verbindungen, wie Monophenole, die in bekannter Weise und in den bekannten Mengen bei der Synthese der Homopolycarbonate eingesetzt werden.

Die Vermischung der Homopolycarbonate aus 3,3′-Dihydroxydiphenylether mit den anderen Thermoplasten erfolgt beispielsweise auf den bekannten Verarbeitungsmaschinen für Polymere, wie Schnecken- oder Kolben- Maschinen, oder auf Verarbeitungsmaschinen mit rotierenden Elementen wie Mischern oder Knetern; bevorzugt eignen sich Schneckenspritzgießmaschinen, Einschnecken- oder Zweischnecken, Extruder, Planetwalzenextruder, Verarbeitungsmaschinen mit rotierenden Kammern, die zwischen den rotierenden Elementen hohe scheinbare Schergeschwindigkeiten zwischen 10 und 1000 $sec^{-1}$ erzeugen können.

Man kann die Polymere auch in gemeinsamen Lösungsmitteln mischen und nach dem Mischen in

bekannter Weise die Lösungsmittel entfernen. Ein geeignetes Lösungsmittel, die sich naturgemäß auch nach der Art des zugemischten anderen Thermoplasten richten, ist beispielsweise $CH_2Cl_2$.

Vor, während oder nach der Vermischung der Homopolycarbonate mit den anderen Thermoplasten können für die einzelnen Komponenten übliche Additive wie organische oder anorganische Füllstoffe oder Verstärkungsstoffe sowie oligomere Verbindungen, bevorzugt siliciumhaltige Füllstoffe und/oder Verstärkungsstoffe, wie Glasfasern, Fasern aus anderen Thermoplasten und/oder Kohlefasern, zugesetzt werden.

Die Herstellung der erfindungsgemäßen Folien aus den erfindungsgemäßen Mischungen erfolgt beispielsweise durch Extrusion oder durch das bekannte Folienblasverfahren. Man kann auch die Lösungen der Mischungen auf Flüssigkeiten, die Nichtlösungsmittel für die Mischungen und deren Lösungsmittel sind, ausbreiten und so porenfreie Filme durch Verdampfen der Lösungsmittel herstellen, wobei man nach Filmbildung auch die Basisflüssigkeit verdampfen kann oder den Film von der Basisflüssigkeit in bekannter Weise abhebt. Die Herstellung der Folien kann auch nach den in der EP-OS 0 242 147 beschriebenen Verfahren erfolgen.

Die erfindungsgemäßen Folien finden in Form von Membranen, Hohlfolien oder Flachfolien überall dort Verwendung, wo hohe Barriereeigenschaften gefragt sind. Man kann also zum Beispiel die Folien als Additivfolien für koch- und ofenfeste dichte Verpackungen verwenden. Weiterhin kann man die Folien zusammen mit mikrowellenfesten Verpackungen aus Polysulfonen, Polyetherimiden oder einem kristallisierten Polyester als verbesserte Verpackungsmaterialien und Formteile für Mikrowellengeschirr verwenden. Plastikflaschen aus Mehrfachfolien, die die erfindungsgemäßen Folien enthalten, haben verbessertes Barrierenverhalten und sind daher für die Aufbewahrung von Flüssigkeiten, die $CO_2$ enthalten, geeignet. Weiterhin finden die Folien auch Verwendung als Verpackungsmaterial für Lebensmittel.

Die erfindungsgemäßen Folien können somit auch im Verbund mit bekannten anderen Folien aus thermoplastischen Kunststoffen verwendet werden, beispielsweise im Verbund mit Folien aus Bisphenol-A-Homopolycarbonaten oder mit Folien aus Copolycarbonaten des 2,2-Bis-(4-hydroxyphenyl)-propans und des 1,1-Bis-(4-hydroxyphenyl)-cyclohexans.

Derartige Verbundfolien finden Verwendung insbesondere im Verpackungsbereich, z.B. bei der Verpakkung von Lebensmitteln, bei der Herstellung von barrieregeschützten $CO_2$-haltigen Flüssigkeiten und in Membranen zur Gastrennung.

## Beispiele

### Beispiel a

Nach dem in H. Schnell "Chemistry and Physics of Polycarbonates", Polymer Reviews, Vol. 9, Seite 33 ff, Interscience Publ. (1964) beschriebenen Phasengrenzflächenverfahren wurde ein Homopolycarbonat auf Basis des Bisphenols der Formel (Ia)

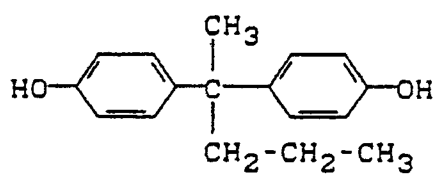

(Ia)

hergestellt. Es hatte eine in Methylenchlorid in C = 5 g/l bei 25° C gemessene relative Viskosität von 1,27, ein gewichtsgemitteltes Molekulargewicht von 36300 g/mol bei einem Zahlenmittel von 16500 g/mol, nachgewiesen durch Gelpermeationschromatographie. Die Glastemperatur, gemessen mit einer Aufheizrate von 20 K/min mit Hilfe der DSC-Methode betrug 102° C, die bei Raumtemperatur gemessene Dichte betrug 1,1318 g/ccm und die im langsamen Zugversuch (2 mm/min Abzugsgeschwindigkeit) gemessene Yield-Spannung betrug 42 MPa.

An einer 2,14 mm dicken Flachfolie aus diesem Material wurde die Permeabilität für Sauerstoff bestimmt. Dabei wurde durch Verpressen nach 5-minütiger Temperung bei 150° C unter einem Druck von 200 bar die Folie hergestellt und dann bei 80° C 48 h lang im Vakuum behandelt.

Die Permeationsmessungen wurden erst nach 2-tägiger Lagerung der Proben im Vakuum bei einer Lagertemperatur von 23° C durchgeführt. Nach 20 h Meßzeit wurde die Permeation aus dem jeweiligen Gasdurchsatz gemessen. Die Meßtemperatur betrug 23° C, die relative Luftfeuchtigkeit betrug 0 %.

Bei der Permeationsmessung wurden Druckmeßkondensatoren als Detektoren verwendet. Die Permeabilität von $O_2$, gemessen in Einheiten

$$\frac{\text{von cm}^3 \times \text{mm}}{\text{m}^2 \times 24\text{h} \times 10^5\ \text{Pa}}$$

, betrug 121,8.

Beispiel b

Nach dem in Beispiel a) erwähnten allgemeinen Verfahren wurde ein Homopolycarbonat auf Basis des Diphenols der Formel (Ib)

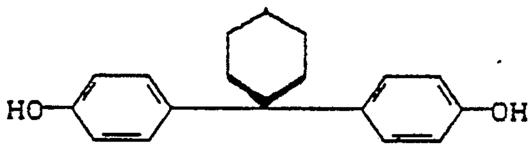

(Ib)

hergestellt. Die physikalischen Daten sind, wie in Beispiel a) beschrieben, gemessen und die folgenden: Relative Viskosität 1.2, $\overline{M}w$ 25 300, $\overline{M}n$ = 13 200, Glastemperatur 167° C, Dichte 1,2051 g/ccm und Yieldspannung 60 MPa.

An einer Flachfolie einer Dicke von 140 µ, die wie in Beispiel a) hergestellt wurde (jedoch verpreßt bei einer Temperatur von 220° C), wurde die Permeation für $O_2$ gemessen:

$$22{,}0\ \frac{\text{cm}^3 \times \text{mm}}{\text{m}^2 \times 24\text{h} \times 10^5\ \text{Pa}}$$

Beispiel c

Wie in Beispiel a) wurde ein Homopolycarbonat auf Basis des Diphenols der Formel (Ic)

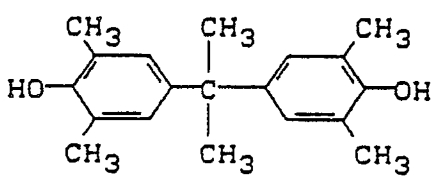

(Ic)

hergestellt und die folgenden physikalischen Daten, wie in Beispiel a) beschrieben, gemessen: Relative Viskosität 1,29, $\overline{M}w$ = 39300, $\overline{M}n$ =15700, Glastemperatur = 197° C, Dichte = 1,0861 g/ccm, und Festigkeit 36 MPa.

An einer Flachfolie einer Dicke von 100µ, die wie in Beispiel a) hergestellt wurde (jedoch bei 280° C verpreßt), wurde die Permeation für $O_2$ gemessen:

$$559{,}0\ \frac{\text{cm}^3 \times \text{mm}}{\text{m}^2 \times 24\text{h} \times 10^5\ \text{Pa}}$$

Beispiel d

Wie in Beispiel a) wurde ein Homopolycarbonat auf Basis des Diphenols der Formel (Id)

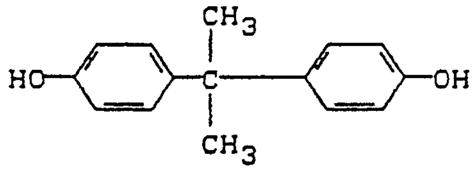

(Id)

hergestellt und die folgenden physikalischen Daten, wie in Beispiel a) gemessen, ermittelt: Relative Viskosität 1,2, $\overline{M}w$ = 19200, $\overline{M}n$ = 10000, Glastemperatur 139° C, Dichte 1,1888 g/ccm und Yieldspannung 62 MPa.

An entsprechenden Flachfolien wurde die Permeation für $O_2$ gemessen:

$$87{,}1 \; \frac{cm^3 \; x \; mm}{m^2 \; x \; 24h \; x \; 10^5 \; Pa}$$

Beispiel e

Nach dem Verfahren des Beispiels a) wurde ein Homopolycarbonat auf Basis des 3,3′-Dihydroxydiphenylether hergestellt. Es hatte eine relative Viskosität von 1,195, eine Dichte im Festkörper von 1,332 g/ccm, eine molekulare Uneinheitlichkeit von 3,5 und war nicht kristallin. Diese physikalischen Daten sind wie in Beispiel a) gemessen wurden.

In den nachfolgenden Beispielen 1 bis 4 sind die Polycarbonate der Beispiele a) bis d) mit dem Polycarbonat des Beispiels e) in bekannter Weise vermischt worden und daraus erfindungsgemäße Folien hergestellt worden:

Beispiel 1

150 g Polycarbonat aus Beispiel e) wurden mit 850 g Polycarbonat aus Beispiel a) auf einer üblichen Mischmaschine bei 220° C vermischt und daraus eine Folie mit einer Dicke von 0,5 mm gepreßt. Die Permeabilität von $O_2$ betrug 63 Einheiten. Die Yieldspannung betrug 50 MPa. Die Herstellung der Folie und die Messung ihrer Eigenschaften erfolgte wie für Beispiel a) angegeben.

Beispiel 2

100 g Polycarbonat aus Beispiel e) wurden mit 900 g Polycarbonat aus Beispiel b) wie unter Beispiel 1 - allerdings bei 290° C - vermischt. Die Folie hatte eine Dicke von 0,431 mm. Die Permeabilität von $O_2$ betrug lediglich 11 Einheiten. Die Yieldspannung betrug 67 MPa. Herstellung der Folie und die Messung ihrer Eigenschaften erfolgte wie für Beispiel b) angegeben.

Beispiel 3

150 g Polycarbonat aus Beispiel e) wurden mit 850 g Polycarbonat aus Beispiel c) wie unter Beispiel 1 beschrieben - allerdings bei 330° C - vermischt. Die Folie hatte einer Dicke von 0,51 mm und war relativ zäh. Gemessen wurde eine Permeabilität von $O_2$ von 45 Einheiten. Die Yieldspannung betrug 45 MPa. Die Herstellung der Folie und die Messung ihrer Eigenschaften erfolgte wie für Beispiel c) angegeben.

Beispiel 4

30 g Polycarbonat aus Beispiel e) wurden mit 70 g Polycarbonat aus Beispiel d) wie unter Beispiel 1

beschrieben, jedoch bei 320° C, vermischt. Bei einer Dicke von 0,32 mm wurde an der Folie eine Permeabilität von $O_2$ von 15,3 Einheiten gemessen. Die Yieldspannung betrug 59 MPa.

Die Herstellung der Folie und die Messung ihrer Eigenschaften erfolgte wie für Beispiel d) angegeben.

## Ansprüche

1. Verwendung von thermoplastischen Homopolycarbonaten aus 3,3′-Dihydroxydiphenylether in Mengen von 3 Gew.-% bis 30 Gew.-%, bezogen auf das Gesamtgewicht an Thermoplasten, zur Modifizierung von Folien aus anderen Thermoplasten als den thermoplastischen Homopolycarbonaten aus 3,3′-Dihydroxydiphenylether.

2. Verwendung der thermoplastischen Homopolycarbonate aus 3,3′-Dihydroxydiphenylether gemäß Anspruch 1 in Mengen von 5 Gew.-% bis 25 Gew.-%.

3. Verwendung der thermoplastischen Homopolycarbonate aus 3,3′-Dihydroxydiphenylether gemäß Anspruch 1 in Mengen von 8 Gew.-% bis 20 Gew.-%.

4. Verfahren zur Modifizierung von Folien aus anderen Thermoplasten als den thermoplastischen Homopolycarbonaten aus 3,3′-Dihydroxydiphenylether, dadurch gekennzeichnet, daß man die anderen Thermoplasten mit thermoplastischen Homopolycarbonaten aus 3,3′-Dihydroxydiphenylether in Mengen von 3 Gew.-% bis 30 Gew.-%, bezogen auf das Gesamtgewicht an Thermoplasten, in bekannter Weise innig vermischt und danach das erhaltene Gemisch in bekannter Weise zu Folien verarbeitet.

5. Folien erhältlich nach dem Verfahren des Anspruchs 4.

6. Mischungen enthaltend 3 Gew.-% bis 30 Gew.-% an thermoplastischen Homopolycarbonaten aus 3,3′-Dihydroxydiphenylether und 97 Gew.-% bis 70 Gew.-% an anderen Thermoplasten als den thermoplastischen Homopolycarbonaten aus 3,3′-Dihydroxydiphenylether.